# EUROPEAN PATENT APPLICATION

(11) **EP 4 651 051 A1**
(43) Date of publication of application: **19.11.2025**
(21) Application number: 23916212.6
(22) Date of filing: 14.12.2023
(51) Int. Cl.: G06Q 10/0875, G06Q 10/087, G06Q 50/04, G05B 19/418

(54) **STOCK MANAGEMENT DEVICE, STOCK MANAGEMENT METHOD, AND STOCK MANAGEMENT PROGRAM**

(30) Priority: 10.01.2023 JP 2023001982
(71) Applicant: Amada Co., Ltd., Isehara-shi, Kanagawa 259-1196 (JP)
(72) Inventor: FUKUYAMA, Shogo, Isehara-shi, Kanagawa 259-1196 (JP); IWAI, Yoshiki, Isehara-shi, Kanagawa 259-1196 (JP)
(74) Representative: Grünecker Patent- und Rechtsanwälte PartG mbB
(86) International application number: PCT/JP2023/044905
(87) International publication number: WO 2024/150598

(57) **Abstract**

A stock management device is configured to be able to execute an identifier issuance process of issuing a unique identifier for each piece of nesting data, a part information acquisition process of acquiring part information of one or more pieces of part data included in the nesting data, and an association process of associating the identifier of the nesting data with the part information of the part data included in the nesting data, in which the nesting data is able to include the part data for an ordered part having a manufacturing number and the part data for a work-in-process stock part having no manufacturing number, so that the work-in-process stock part is managed by the identifier.

## Description

### Technical Field

The present invention relates to a stock management device, a stock management method, and a stock management program.

### Background Art

There has been conventionally known a production management computer program that can analyzes the internal text of a CAM program for machining materials as a formal language to determine the number and breakdown of parts that can be acquired by executing this CAM program (Patent Literature 1, etc.). According to conventional production management computer programs, it is possible to grasp the types and respective numbers of parts manufactured by executing each CAM program.

### Citation List

### Patent Literature

Patent Literature 1: Japanese Patent Application Laid-Open Publication No. 2015-170230

### Summary

By the way, in a blanking process of cutting out multiple types and/or multiple pieces of parts from a single metal plate (sheet) having a standard size, the single sheet may include ordered parts arranged to be produced on the basis of orders from clients, and work-in-process stock parts to be processed for the purpose of efficiently using the sheet or securing a reserve stock of parts, regardless of the orders.

However, the conventional production management computer programs have a problem in that they cannot distinguish between the ordered parts and the work-in-process stock parts even when the ordered parts and the work-in-process stock parts are mixed on the sheet, which makes it impossible to grasp only the work-in-process stock parts.

In general, ordered parts are managed by their manufacturing numbers, and thus, the use of the manufacturing numbers makes it possible to grasp the stock status and ensure the traceability. On the other hand, since the work-in-process stock parts may be added later in the on-site determination, the conventional production management computer programs have a problem in that the work-in-process stock parts cannot be managed with respect to accurate grasping of the stock status of the work-in-process stock parts and ensuring of the traceability.

One aspect of the present invention provides a stock management device, a stock management method, and a stock management program that can appropriately manage work-in-process stock parts.

A stock management device according to one aspect of the present invention is configured to be able to execute an identifier issuance process of issuing a unique identifier for each piece of nesting data, a part information acquisition process of acquiring part information of one or more pieces of part data included in the nesting data, and an association process of associating the identifier of the nesting data with the part information of the part data included in the nesting data, in which the nesting data is able to include the part data for an ordered part having a manufacturing number and the part data for a work-in-process stock part having no manufacturing number, so that the work-in-process stock part is managed by the identifier.

A stock management method according to one aspect of the present invention includes issuing a unique identifier for each piece of nesting data, acquiring part information of one or more pieces of part data included in the nesting data, and associating the identifier of the nesting data with the part information of the part data included in the nesting data, in which the nesting data is able to include the part data for an ordered part having a manufacturing number and the part data for a work-in-process stock part having no manufacturing number, so that the work-in-process stock part is managed by the identifier.

A stock management program according to one aspect of the present invention causes a stock management device to execute an identifier issuance process of issuing a unique identifier for each piece of nesting data, a part information acquisition process of acquiring part information of one or more pieces of part data included in the nesting data, and an association process of associating the identifier of the nesting data with the part information of the part data included in the nesting data, in which the nesting data is able to include the part data for an ordered part having a manufacturing number and the part data for a work-in-process stock part having no manufacturing number, so that the work-in-process stock part is managed by the identifier.

According to an aspect of the present invention, the stock management device, the stock management method, and the stock management program issue an identifier for each piece of nesting data, and manages the identifier of the nesting data in association with the part information for a part included in the nesting data, thereby making it possible to properly manage a work-in-process stock part having no manufacturing number.

According to the stock management device, the stock management method, and the stock management program according to an aspect of the present invention, a work-in-process stock part can be managed properly.

### Brief Description of Drawings

[Figure 1] Figure 1 is a schematic diagram illustrating a manufacturing assistance system according to an embodiment of the present invention.
[Figure 2] Figure 2 is a functional block diagram illustrating a nesting device of the present embodiment.
[Figure 3] Figure 3 is a schematic diagram illustrating an example of production arrangement information of the present embodiment.
[Figure 4] Figure 4 is a schematic diagram illustrating an example of nesting in the present embodiment.
[Figure 5] Figure 5 is a schematic diagram illustrating an example of a manufacturing status of the present embodiment.
[Figure 6] Figure 6 is a schematic diagram illustrating an example of association between part information and a work job ID in the present embodiment.
[Figure 7] Figure 7 is a schematic diagram illustrating an example of the association between the part information and the work job ID in the present embodiment.
[Figure 8] Figure 8 is a schematic diagram illustrating an example of the association between the part information and the work job ID in the present embodiment.
[Figure 9] Figure 9 is a schematic diagram illustrating an example of production arrangement of the present embodiment.
[Figure 10] Figure 10 is a schematic diagram illustrating an example of the manufacturing status of the present embodiment.
[Figure 11] Figure 11 is a schematic diagram illustrating an example of nesting information of the present embodiment.
[Figure 12] Figure 12 is a schematic diagram illustrating an example of nesting data of the present embodiment.
[Figure 13] Figure 13 is a schematic diagram illustrating an example of the nesting information of the present embodiment.
[Figure 14] Figure 14 is a schematic diagram illustrating an example of the nesting data of the present embodiment.
[Figure 15] Figure 15 is a schematic diagram illustrating an example of the manufacturing status of the present embodiment.
[Figure 16] Figure 16 is a schematic diagram illustrating an example of issuance of the work job IDs in the present embodiment.
[Figure 17] Figure 17 is a schematic diagram illustrating an example of the production arrangement of the present embodiment.
[Figure 18] Figure 18 is a schematic diagram illustrating an example of allocation of work-in-process stock parts of the present embodiment.
[Figure 19] Figure 19 is a schematic diagram illustrating an example of assignment of a manufacturing number in the present embodiment.
[Figure 20] Figure 20 is a schematic diagram illustrating an example of the manufacturing status of the present embodiment.
[Figure 21] Figure 21 is a flowchart illustrating an example of a stock management method of the present embodiment.

### Description of Embodiment

Hereinafter, the best mode for carrying out the present invention will be described using the drawings. However, the following embodiments do not limit the invention according to each claim, and not all of the combinations of features described in the embodiments are essential to the solution of the invention.

### [Overall Configuration of Manufacturing Assistance System According to the Present Embodiment]

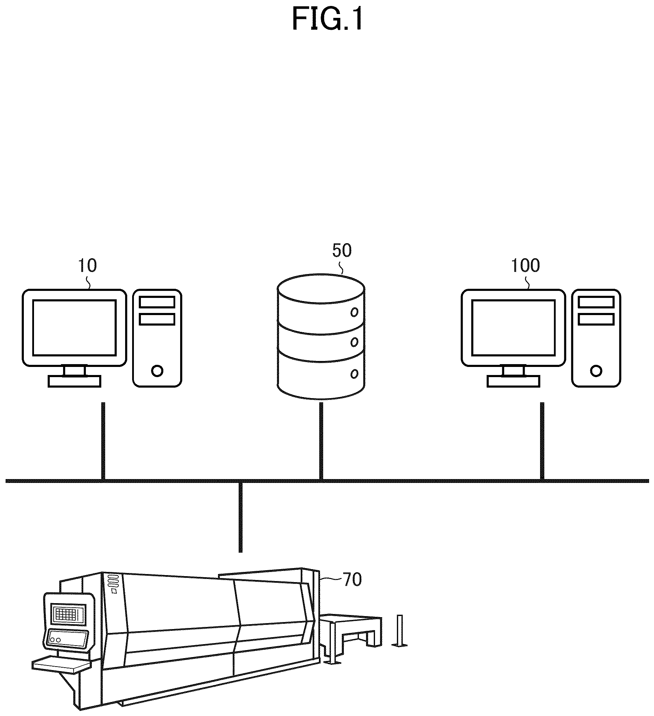

Figure 1 is a schematic diagram illustrating a manufacturing assistance system according to an embodiment of the present invention.

First, referring to Figure 1, an overview of a manufacturing assistance system 1 according to the embodiment of the present invention will be described. The manufacturing assistance system 1 according to the present embodiment is a manufacturing assistance system that manages a blanking process of cutting parts having arbitrary shapes out of a single metal plate (hereinafter, referred to as a sheet in the present embodiment) having a standard size. The manufacturing assistance system 1 schematically includes a nesting device 100 that functions as a stock management device, as illustrated in Figure 1. In addition, the manufacturing assistance system 1 includes a production management device 10, a server 50, and a blank processing machine 70. These devices are connected in a mutually communicable manner.

The production management device 10 is an electronic computer such as a desktop personal computer, a laptop computer, or a tablet terminal. The production management device 10 manages order information, product information including one or more parts, manufacturing process information of a product and parts, and progress information of each process, and makes the production arrangement of the product. In addition, the production management device 10 issues manufacturing numbers SN to the product and parts for which the production arrangements have been made. Furthermore, the production management device 10 creates production arrangement information 12 related to the product when arranging the production of the product. The production management device 10 stores the created production arrangement information 12 in a production technology management database, which will be described later, of a server 50.

In the present embodiment, the product is a product made to be in a deliverable state to the client through all manufacturing processes in the factory. The product is comprised of one or more parts. Furthermore, in the present embodiment, the part is a part included in the product.

The production arrangement information 12 includes a client, product information, part information PI, part data, and the like. The product information includes, for example, a product name, a production due date of the product, a scheduled processing date of the product, manufacturing process information of the product, the quantity of the products, a manufacturing number SN of the product, and information related to a material. In addition, the part information PI includes, for example, a part name, a production due date of the part, scheduled processing date of the part, manufacturing process information of the part, the quantity of parts, a manufacturing number SN of the part, and information related to a material.

The part data is design data (drawing data) that shows the shape of the part, and is, for example, computer-aided design (CAD) data of the part. The manufacturing process information is information that indicates, for example, processes involved until the product is completed, such as a bending process after the blanking process, a secondary process such as deburring, and an assembly process such as welding, screwing, and inspection. The information related to a material includes, for example, the type of the material, and the plate thickness.

Furthermore, the production management device 10 is configured to be able to output a production arrangement document 16 of the created production arrangement information 12. The production arrangement document 16 includes the contents of the production arrangement information 12 and a barcode. A user can check the production arrangement information 12 related to the production arrangement document 16 by reading the barcode with the nesting device 100, for example.

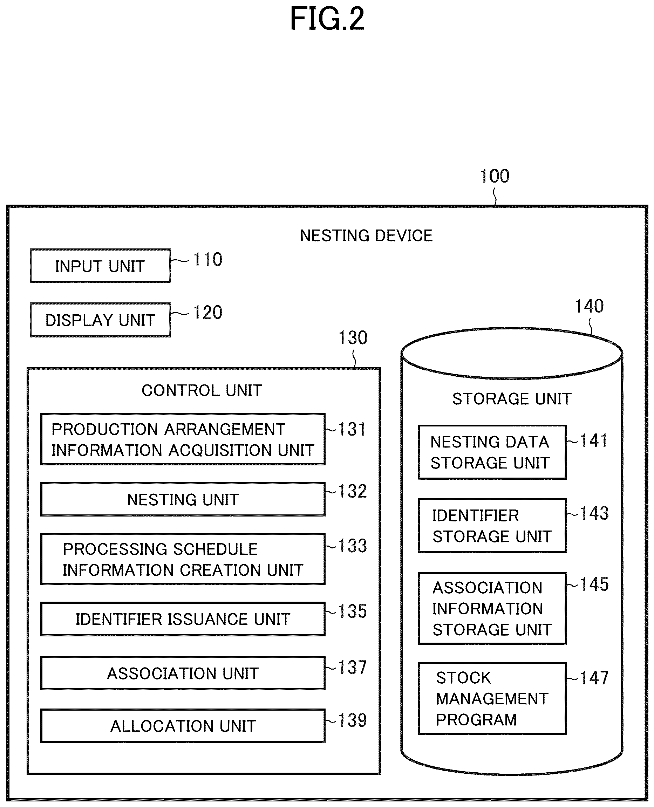

Figure 2 is a functional block diagram illustrating the nesting device of the present embodiment.

The nesting device 100 is an electronic computer such as a desktop personal computer, a laptop computer, or tablet terminal, and includes an input unit 110, a display unit 120, a control unit 130, and a storage unit 140, as illustrated in Figure 2. In addition, the nesting device 100 has CAD / computer-aided manufacturing (CAM) software.

The input unit 110 is comprised of, for example, input devices such as a keyboard, a mouse, a touchpad, and a joystick, and the operation on the input unit 110 makes it possible to perform operations such as edition of nesting data 142, which will be described late, in addition to the functions of information inputs that are normally required in the nesting device 100. Such a configuration enables the nesting device 100 to perform operations such as manual addition of part data to the nesting data 142 via the input unit 110.

The display unit 120 has a display as a display device, and displays, for example, a nesting screen in addition to the screen display functions normally required in the nesting device 100. In addition, the display unit 120 may be comprised of a touch panel (touch screen) that has the functions of the input unit 110. When the display unit 120 is comprised of a touch panel, the user can input various kinds of information, such as edition of nesting data 142, to the nesting device 100 by operating the display unit 120.

Note that each of the input unit 110 and the display unit 120 is not limited to the configuration described above, and any unit (for example, display means or input means that can be used remotely) configured to have functions equivalent to those described above can be applied instead of the input unit 110 and the display unit 120.

The control unit 130 is comprised of an integrated arithmetic processing device that includes a central processing unit (CPU) and a graphics processing unit (GPU), for example. The control unit 130 includes, as illustrated in Figure 2, a production arrangement information acquisition unit 131, a nesting unit 132, a processing schedule information creation unit 133, an identifier issuance unit 135, an association unit 137, and an allocation unit 139.

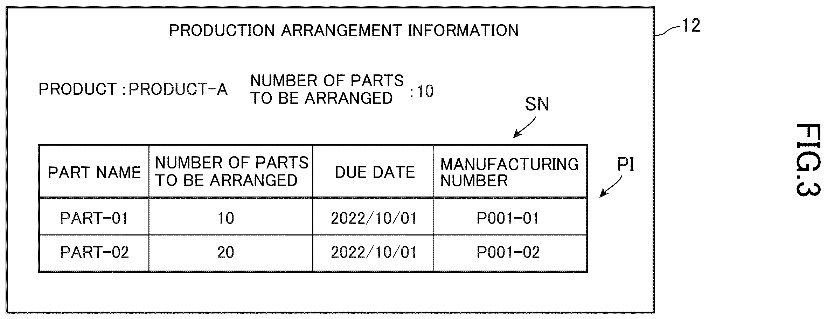

Figure 3 is a schematic diagram illustrating an example of the production arrangement information of the present embodiment.

The production arrangement information acquisition unit 131 is configured to be able to execute a production arrangement information acquisition process of acquiring the production arrangement information 12 created by the production management device 10, as illustrated in Figure 3. The production arrangement information 12 acquired by the production arrangement information acquisition unit 131 includes at least the part information PI and the part data. The part information PI includes a part name, the number of parts to be arranged, the due date of the part, and the manufacturing number SN of the part, and the like.

In the present embodiment, the production arrangement information acquisition unit 131 acquires the production arrangement information 12 stored in the production technology management database of the server 50, but is not limited to this; the production arrangement information acquisition unit 131 may also acquire the production arrangement information 12 directly from the production management device 10. In addition, the production arrangement information acquisition unit 131 may acquire the production arrangement information 12 each time the production management device 10 creates the production arrangement information 12, or may acquire multiple pieces of production arrangement information 12 at once.

Note that, in the present embodiment, the production arrangement information acquisition unit 131 automatically acquires the production arrangement information 12, but is not limited to this. The user can cause the production arrangement information acquisition unit 131 to manually acquire the production arrangement information 12 by reading the production arrangement document 16 into the nesting device 100 or by selecting the production arrangement information 12 via the input unit 110.

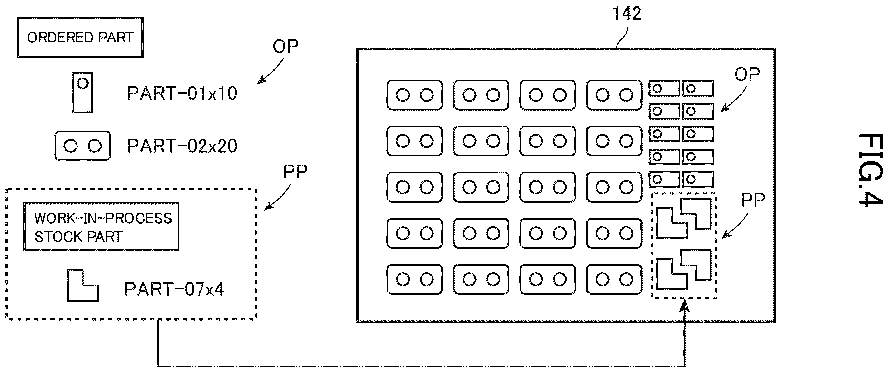

Figure 4 is a schematic diagram illustrating an example of nesting in the present embodiment.

For example, the nesting unit 132 selects ordered parts OP having the same plate thickness included in the production arrangement information 12 on the basis of the production arrangement information 12 output from the production management device 10 to perform nesting for arranging the part data of the selected parts without gaps, as illustrated in Figure 4, and creates the nesting data 142. In the present embodiment, the nesting data 142 can include the part data of the ordered parts OP having the manufacturing numbers SN assigned by the production management device 10, and the part data of the work-in-process stock parts PP having no manufacturing numbers SN.

In the present embodiment, the ordered part OP is a part for which the production arrangement has been made, that is, a part that has part information PI included in the production arrangement information 12 acquired by the production arrangement information acquisition unit 131. In the present embodiment, the work-in-process stock part PP is a part for which the production arrangement is not made, and which is stored as a reserve stock after the blanking process.

For example, the user can manually add the part data of the work-in-process stock part PP to the nesting data 142 created by the nesting unit 132 via the input unit 110. Such a configuration makes it possible, when there are parts which it is desired to manufacture as the work-in-process stock parts together with the ordered parts OP, such as when the yield of the sheet is low or when there are parts which it is desired to secure as backup stocks, to add the part data of the parts.

For example, the user can perform the nesting of the part data of a part "PART-07" as a work-in-process stock part PP in a blank space of the nesting data 142, in addition to the part data of parts "PART-01" and "PART-02" which are the ordered parts for which the production arrangements have been made, as illustrated in Figures 3 and 4.

Note that the user can additionally perform the nesting of the part data to the nesting data 142 before the processing schedule information I, which will be described later, of the nesting data 142 is created, and can also additionally perform the nesting of the part data to the nesting data 142 after the processing schedule information I of the nesting data 142 has been created.

In addition, the nesting unit 132 calculates a processing path for the blank processing machine 70 to process the sheet according to the nesting data 142 and creates an NC control program for the blank processing machine 70.

The processing schedule information creation unit 133 is configured to create the processing schedule information I related to the nesting data 142 created by the nesting unit 132. The processing schedule information creation unit 133 stores the created processing schedule information I in the production technology management database of the server 50.

The processing schedule information I includes a schedule creation date of the processing schedule information I, a schedule name, a scheduled processing date, a planned processing machine, nesting data 142, a sheet name of the nesting data 142, a list of parts included in the nesting data 142, the part information PI of parts included in the nesting data 142, an NC control program, and the like. In the present embodiment, the processing schedule information I may be a concept that includes both of a summary of the processing schedule information related to multiple pieces of nesting data 142, and the processing schedule information related to a single piece of nesting data 142, or may be either one.

In addition, the nesting device 100 is configured to be able to output a schedule instruction document of the created processing schedule information I. The schedule instruction document includes the contents of the processing schedule information I and the barcode. The user checks the processing schedule information I related to the schedule instruction document by reading the barcode with the blank processing machine 70, thereby making it possible to read the NC control program. In addition, the schedule instruction document has multiple program instruction documents. The program instruction document includes a schedule creation date, a sheet name, images of nesting data 142, a list of parts included in the sheet, the quantity of parts, a scheduled processing date, and the like.

The identifier issuance unit 135 is configured to be able to execute an identifier issuance process that issues a unique identifier for each piece of nesting data 142. Specifically, the identifier issuance unit 135 issues a work job ID 144 as a unique identifier to the nesting data 142 created by the nesting unit 132. The identifier issuance unit 135 issues a work job ID 144 that is different for each piece of nesting data 142.

In the present embodiment, the phrase "each piece of nesting data" means data for a single sheet. For example, when the nesting result spans pieces of nesting data 142 for two or more sheets, the identifier issuance unit 135 issues different work job IDs 144 to the respective pieces of nesting data 142.

The work job ID 144 may consist of a date at the time of nesting and a sequence number, for example, or may consist of only a sequence number, or may be a random string of characters and numbers. For example, the identifier issuance unit 135 issues a work job ID 144 of "ID-001" to the nesting data 142 illustrated in Figure 4.

Note that the identifier issuance unit 135 may issue the work job ID 144 at the time point when the nesting unit 132 creates the nesting data 142, or may issue the work job ID 144 after the blank processing machine 70 performs the blanking process on the basis of the NC control program related to the nesting data 142.

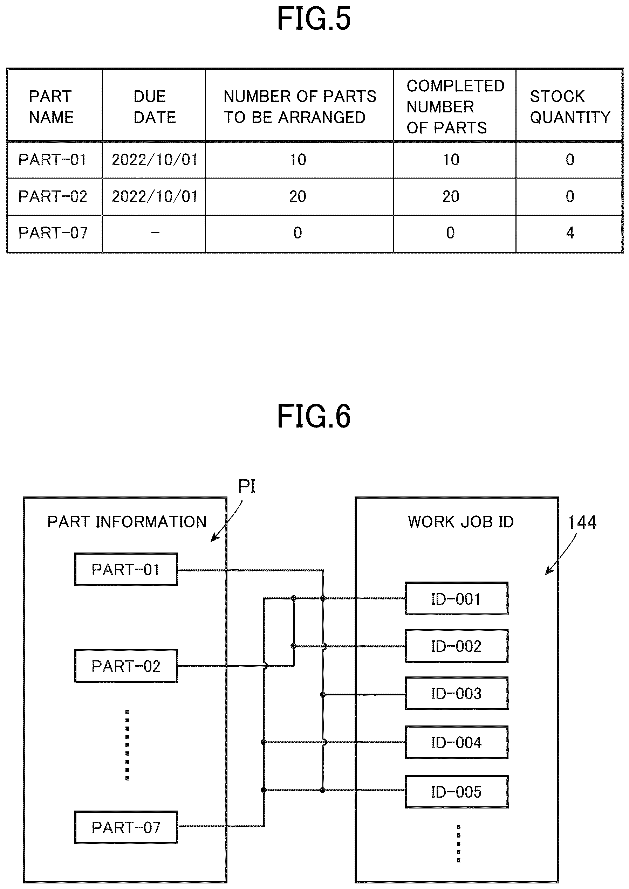

Figure 5 is a schematic diagram illustrating an example of a manufacturing status of the present embodiment.

When the blanking process is executed on the nesting data 142 created by nesting unit 132, the stocks of the parts (ordered parts OP) for which the production arrangements have been made and the parts (work-in-process stock parts PP) whose nesting has been additionally performed by the user are produced. In the present embodiment, as illustrated in Figure 5, the stocks of the ordered parts OP are counted as the completed number of parts and the stocks of the work-in-process stock parts PP are counted as the stock quantity, but the present invention is not limited thereto.

The association unit 137 is configured to be able to execute a part information acquisition process of acquiring the part information PI of one or more pieces of part data included in the nesting data 142, and an association process of associating the identifier (work job ID 144) of the nesting data 142 with the part information PI of the part data included in the nesting data 142.

In the part information acquisition process, the association unit 137 acquires the part information PI of the part data included in the nesting data 142 created by the nesting unit 132 from the production technology management database of the server 50. In addition, the association unit 137 may acquire the part information PI related to the part data of the ordered parts OP from the production arrangement information 12 acquired by the production arrangement information acquisition unit 131.

Figure 6 is a schematic diagram illustrating an example of association between the part information and the work job ID in the present embodiment.

In the association process, the association unit 137 associates the work job ID 144 of the nesting data 142 with the part information PI acquired in the part information acquisition process, as illustrated in Figure 6. When the same part is included in the multiple pieces of nesting data 142, the association unit 137 is configured to be able to associate the part information PI of the part with the multiple work job IDs 144.

For example, there are multiple pieces of nesting data 142 in addition to the nesting data 142 illustrated in Figure 4, and the part data of the part "PART-01" is included in the pieces of nesting data 142 to which the work job IDs 144 of "ID-001", "ID-003", and "ID-005" respectively have been issued. In this case, the association unit 137 associates the part information PI of the part "PART-01" with the three work job IDs 144 of "ID-001", "ID-003", and "ID-005".

In addition, the part data of the part "PART-02" is included in the pieces of nesting data 142 to which the work job IDs 144 of "ID-001" and "ID-002" respectively have been issued. In this case, the association unit 137 associates the part information PI of the part "PART-02" with the two work job IDs 144 of "ID-001" and "ID-002". Similarly, the association unit 137 associates the part information PI of the part "PART-07" with the three work job IDs 144 of "ID-001", "ID-004", and "ID-005".

In addition, when the part data is newly added to the nesting data 142, the association unit 137 is configured to be able to newly associate the work job ID 144 of the nesting data 142 with the part information PI of the newly added part data. In the present embodiment, the phrase "when is newly added" means, for example, when the nesting data 142, for which processing schedule information I has been created once, is edited and the part data is newly added to the nesting data 142, or when the part data is newly added to the nesting data 142 that has been associated with the work job ID 144 once.

In addition, the association unit 137 manages the number of pieces of part data of the work-in-process stock parts PP in the nesting data 142 as the quantity of work-in-process stock parts PP in association with the part information PI. Furthermore, the association unit 137 manages the work job ID 144 of the nesting data 142 and the number of pieces of part data of the work-in-process stock parts PP in the nesting data 142 in association with the part information PI.

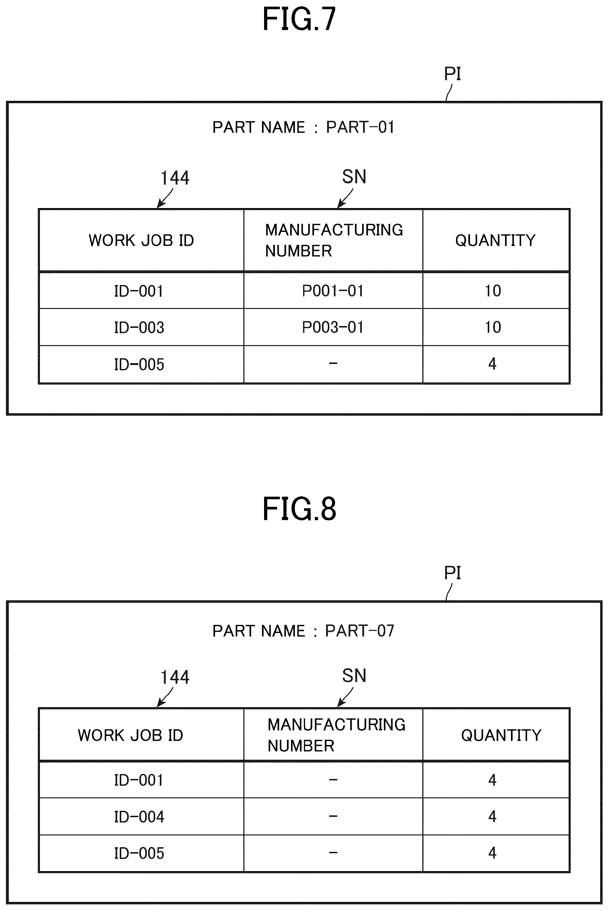

Figure 7 is a schematic diagram illustrating an example of the association between the part information and the work job ID in the present embodiment.

For example, as illustrated in Figure 7, the part "PART-01" is included as an ordered part OP in the pieces of nesting data 142 with the work job IDs 144 of "ID-001" and "ID-003". In addition, the part "PART-01" is included as a work-in-process stock part PP in the nesting data 142 with the work job ID 144 of "ID-005". In this case, the association unit 137 associates the number of pieces (4 pieces in the present embodiment) of part data of the part "PART-01" in the nesting data 142 with the work job ID 144 of "ID-005" as the quantity of work-in-process stock parts PP of the part "PART-01" with the part information PI of the part "PART-01" along with the work job ID 144 of "ID-005".

Figure 8 is a schematic diagram illustrating an example of the association between the part information and the work job ID in the present embodiment.

In addition, as illustrated in Figure 8, the part "PART-07" is included as a work-in-process stock part PP in the pieces of nesting data 142 with the work job IDs 144 of "ID-001", "ID-004", and "ID-005". In this case, the association unit 137 associates the number of pieces (4 pieces in the present embodiment) of part data of the part "PART-07" in the nesting data 142 with the work job ID 144 of "ID-001" as the quantity of work-in-process stock parts PP of the part "PART-07" with the part information PI of the part "PART-07" along with the work job ID 144 of "ID-001".

In addition, the association unit 137 associates the number of pieces (4 pieces in the present embodiment) of part data of the part "PART-07" in the nesting data 142 with the work job ID 144 of "ID-004" as the quantity of work-in-process stock parts PP of the part "PART-07" with the part information PI of the part "PART-07" along with the work job ID 144 of "ID-004". Similarly, the association unit 137 associates the number of pieces (4 pieces in the present embodiment) of part data of the part "PART-07" in the nesting data 142 with the work job ID 144 of "ID-005" as the quantity of work-in-process stock parts PP of the part "PART-07" with the part information PI of the part "PART-07" along with the work job ID 144 of "ID-005".

Note that, when the identifier issuance unit 135 issues the work job ID 144 immediately after the creation of the nesting data 142, the association unit 137 may execute the part information acquisition process and the association process immediately after the identifier issuance process, or may execute the part information acquisition process and the association process after processing has been performed by the blank processing machine 70 on the basis of the NC control program related to the nesting data 142. In addition, the association unit 137 executes the part information acquisition process and the association process after the identifier issuance process when the identifier issuance unit 135 issues the work job ID 144 after the blanking process. Furthermore, the association unit 137 may execute the part information acquisition process and the association process at different timings. For example, the association unit 137 may execute the part information acquisition process before the blanking process and execute the association process after the blanking process.

The allocation unit 139 is configured to determine whether there is a work-in-process stock part PP having the same part information PI as the ordered part OP before the nesting unit 132 nests the part data for the ordered part OP, and to allocate, if determining that there is the work-in-process stock part PP, the work-in-process stock part PP as the ordered part OP without nesting the part data for the ordered part OP.

In addition, the allocation unit 139 may be configured to allocate the work-in-process stock parts PP in order from a higher number of retention days, that is, from the oldest work-in-process stock part PP.

Furthermore, the allocation unit 139 is configured to assign and manage the manufacturing number SN of the ordered part OP to the work-in-process stock part PP that has been allocated as the ordered part OP.

The storage unit 140 has storage media such as a hard disk drive (HDD) and a solid state drive (SSD), and stores various kinds of data as readable and writable data. The storage unit 140 includes a nesting data storage unit 141, an identifier storage unit 143, and an association information storage unit 145, as illustrated in Figure 2. In addition, the storage unit 140 stores a stock management program 147. Furthermore, the storage unit 140 stores programs necessary for controlling each component of the nesting device 100.

The nesting data storage unit 141 stores one or more pieces of nesting data 142 created by the nesting unit 132. The identifier storage unit 143 stores one or more work job IDs 144 issued by the identifier issuance unit 135 to the nesting data 142. Specifically, the identifier storage unit 143 stores the work job ID 144 in association with the information of the nesting data 142 to which the work job ID 144 has been issued.

The association information storage unit 145 stores one or more pieces of association information associated by the association unit 137. The stock management program 147 is configured to cause the nesting device 100 to execute an identifier issuance process of issuing the work job ID 144 for each piece of nesting data 142, a part information acquisition process of acquiring the part information PI of one or more pieces of part data included in the nesting data, and an association process of associating the work job ID 144 of the nesting data with the part information PI of the part data included in the nesting data 142, the nesting data 142 being able to include the part data for an ordered part OP having a manufacturing number SN and the part data for a work-in-process stock part PP having no manufacturing number SN, so that the work-in-process stock part PP is managed by the work job ID 144.

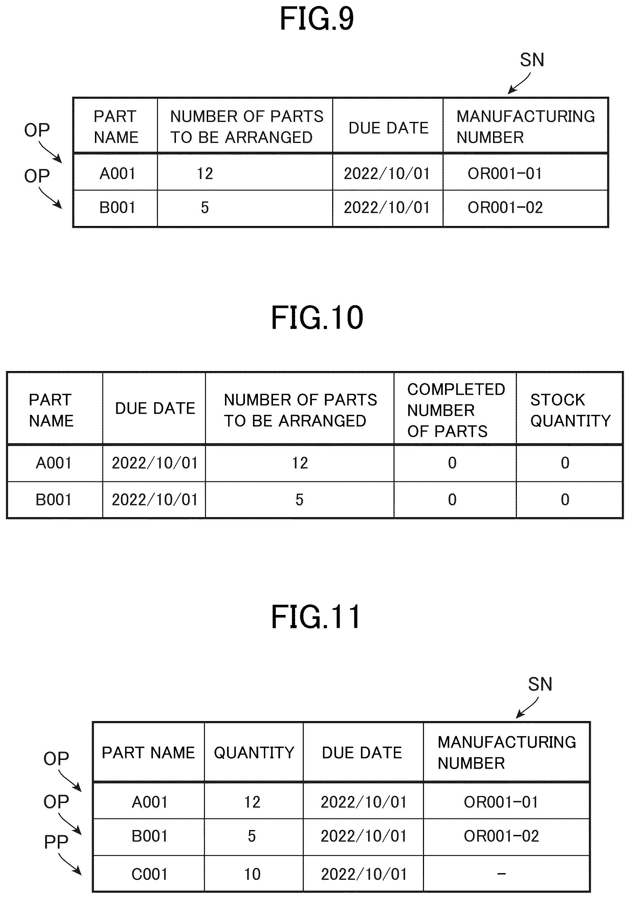

The nesting device 100 having the above configuration is configured to manage the work-in-process stock parts PP by the work job ID 144. Here, a series of processes performed by the nesting device 100 according to the present embodiment will be described with reference to Figures 9 to 20. Note that the following description is an example of the processes performed by the nesting device 100 of the present embodiment and is not limited thereto.

Figure 9 is a schematic diagram illustrating an example of the production arrangement of the present embodiment.

For example, as illustrated in Figure 9, the production management device 10 arranges the production of the ordered parts OP. The production arrangement includes an ordered part OP with a part name "A001" and an ordered part OP with a part name "B001." In the following, in the present embodiment, these are referred to as a part "A001" and a part "B001." The number of parts "A001" to be arranged is 12 pieces, and the number of parts "B001" to be arranged is 5 pieces. In addition, a manufacturing number SN of the part "A001" is "OR001-01", and a manufacturing number SN of the part "B001" is "OR001-02".

Figure 10 is a schematic diagram illustrating an example of the manufacturing status of the present embodiment.

The production arrangement information acquisition unit 131 of the control unit 130 acquires the production arrangement information 12 related to this production arrangement from the server 50. Since the blanking process has not been performed, the completed numbers of parts "A001" and parts "B001" for which the production arrangements have been made are both 0, as illustrated in Figure 10. In addition, the stock quantities of the work-in-process stock parts PP of the part "A001" and part "B001" are also both 0.

Figure 11 is a schematic diagram illustrating an example of nesting information of the present embodiment.

Since the completed numbers and the stock quantities of parts "A001" and parts "B001" are 0, the nesting unit 132 of the control unit 130 creates the nesting data 142 in which the part data for 12 parts "A001" and the part data for 5 parts "B001" are nested. The user wants to process 10 work-in-process stock parts PP with a part name "C001" (hereinafter, referred to as a part "C001" in the present embodiment) along with the ordered parts OP related to the production arrangement, as illustrated in Figure 11. Therefore, the user additionally nests the part data for 10 parts "C001" into the nesting data 142 created by the nesting unit 132.

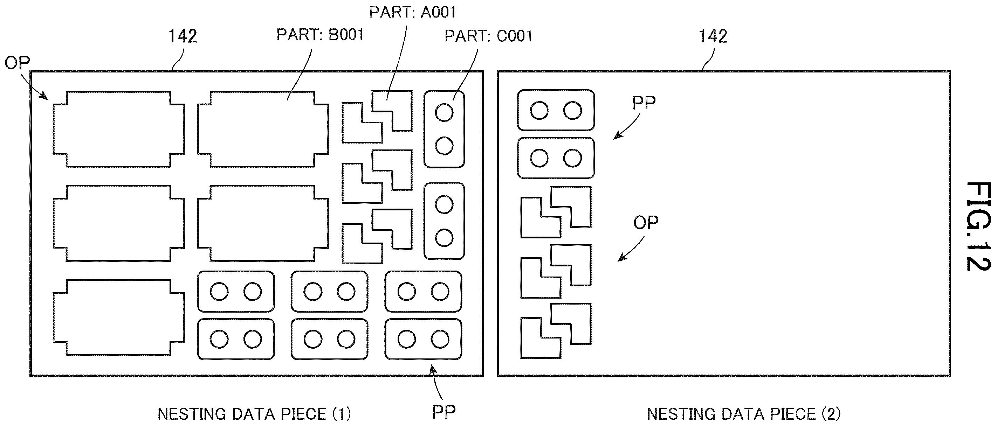

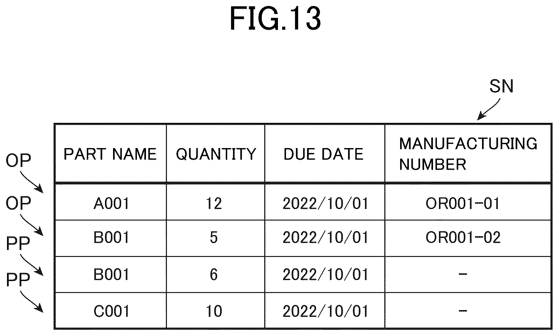

Figure 12 is a schematic diagram illustrating an example of the nesting data of the present embodiment. Figure 13 is a schematic diagram illustrating an example of the nesting information of the present embodiment.

The created nesting data 142 (hereinafter referred to as nesting data pieces (1) and (2) in the present embodiment) includes the part data of the ordered parts OP (part "A001" and part "B001") and the part data of the work-in-process stock parts PP (part "C001"), as illustrated in Figure 12. The nesting data piece (2) has a low yield rate and still has a space for nesting part data. Then, the user further nests the part data for 6 parts "B001" as illustrated in Figure 13.

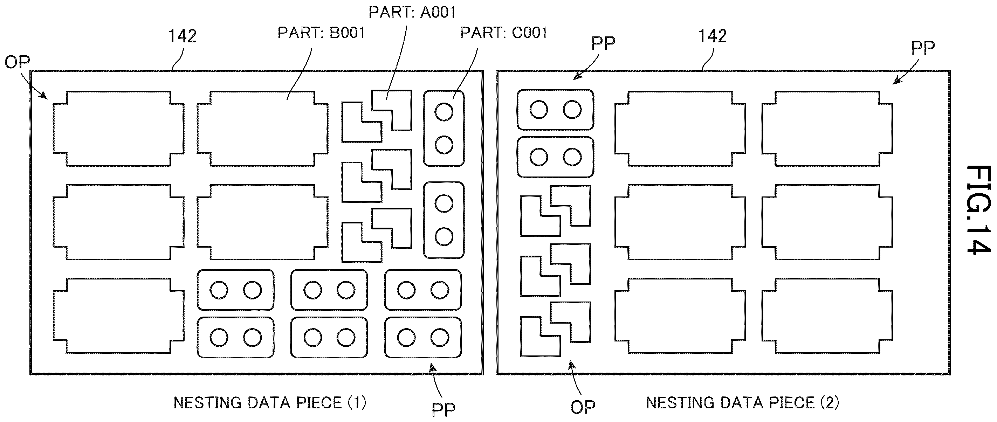

Figure 14 is a schematic diagram illustrating an example of the nesting data of the present embodiment.

The 6 parts "B001" additionally nested into the nesting data piece (2) are processed as the work-in-process stock parts PP because they are not the ordered parts OP. The nesting data pieces (1) and (2) created by nesting the above parts have become the nesting data 142, both of which have a high yield rate, as illustrated in Figure 14.

Note that the user's task of additionally nesting the part data of the work-in-process stock parts PP may be performed by the nesting device 100 or by the blank processing machine 70.

Then, the processing schedule information creation unit 133 of the control unit 130 creates the processing schedule information I related to the nesting data pieces (1) and (2). The processing schedule information I is stored in the production technology management database of the server 50. The blank processing machine 70 acquires the processing schedule information I and performs the blanking process on the sheet on the basis of the nesting data pieces (1) and (2).

Note that the processing schedule information creation unit 133 may create the processing schedule information I before additionally nesting the parts "B001" into the nesting data piece (2). In this case, the processing schedule information creation unit 133 updates the processing schedule information I after adding the parts "B001" to the nesting data piece (2).

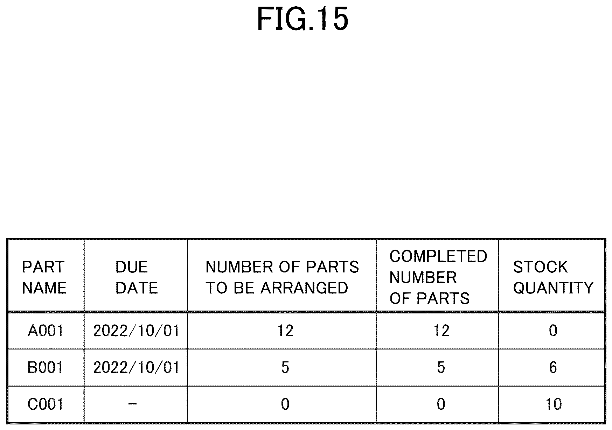

Figure 15 is a schematic diagram illustrating an example of the manufacturing status of the present embodiment.

After the blanking process, in the manufacturing status of each part, the completed number of parts "A001" is 12 and the completed number of parts "B001" is 5 as illustrated in Figure 15. In addition, the stock quantity of parts "B001" is 6, and the stock quantity of parts "C001" is 10.

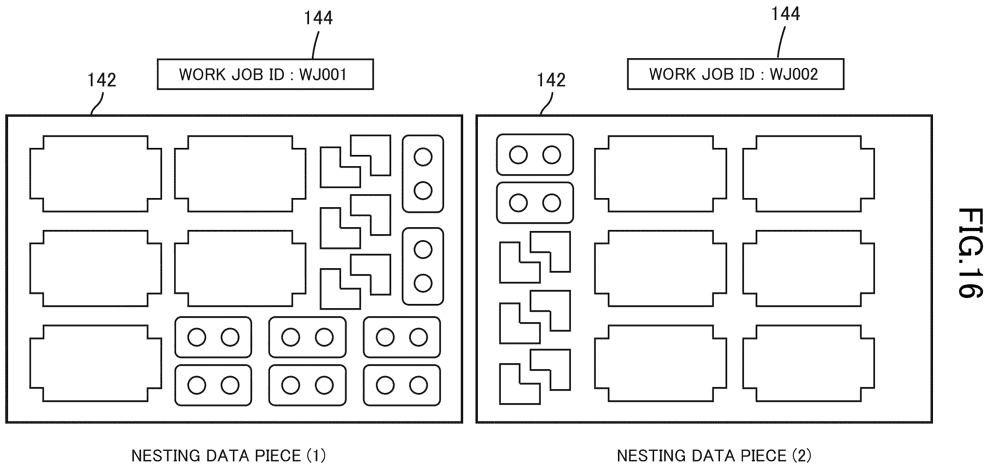

Figure 16 is a schematic diagram illustrating an example of issuance of the work job IDs in the present embodiment.

Then, the identifier issuance unit 135 of the control unit 130 issues work job IDs 144 of "WJ001" and "WJ002" to the nesting data pieces (1) and (2), respectively, as illustrated in Figure 16.

Note that the identifier issuance unit 135 may issue the work job IDs 144 before the blanking process. In addition, the identifier issuance unit 135 may issue the work job IDs 144 before adding the parts "B001" to the nesting data piece (2).

The association unit 137 of the control unit 130 acquires the part data included in the nesting data pieces (1) and (2). Then, the association unit 137 associates the work job IDs 144 of the nesting data pieces (1) and (2) with the part information PI for the part data included in the nesting data pieces (1) and (2). Specifically, the association unit 137 associates the work job ID 144 "WJ001" of the nesting data piece (1) with the part information PI for the part "A001", the part "B001", and the part "C001". In addition, the association unit 137 associates the work job ID 144 "WJ002" of the nesting data piece (2) with the part information PI for the part "A001", the part "B001", and the part "C001".

Note that when the identifier issuance unit 135 issues the work job ID 144 before adding the parts "B001" to the nesting data piece (2), the association unit 137 may execute the association process immediately afterwards. In this case, the association unit 137 newly associates the work job ID 144 "WJ002" of the nesting data piece (2) with the part information PI for the part "B001" after newly adding the parts "B001" to the nesting data piece (2).

Furthermore, the association unit 137 associates the number of pieces of part data of the work-in-process stock parts PP included in the nesting data pieces (1) and (2) as the stock quantity of the work-in-process stock parts PP with the part information PI for each part. Specifically, the association unit 137 associates the work job ID 144 "WJ002" and the stock quantity of 6 with the part information PI for the part "B001". In addition, the association unit 137 associates the work job ID 144 "WJ001" and the stock quantity of 8, and the work job ID 144 "WJ002" and the stock quantity of 2 with the part information PI for the part "C001".

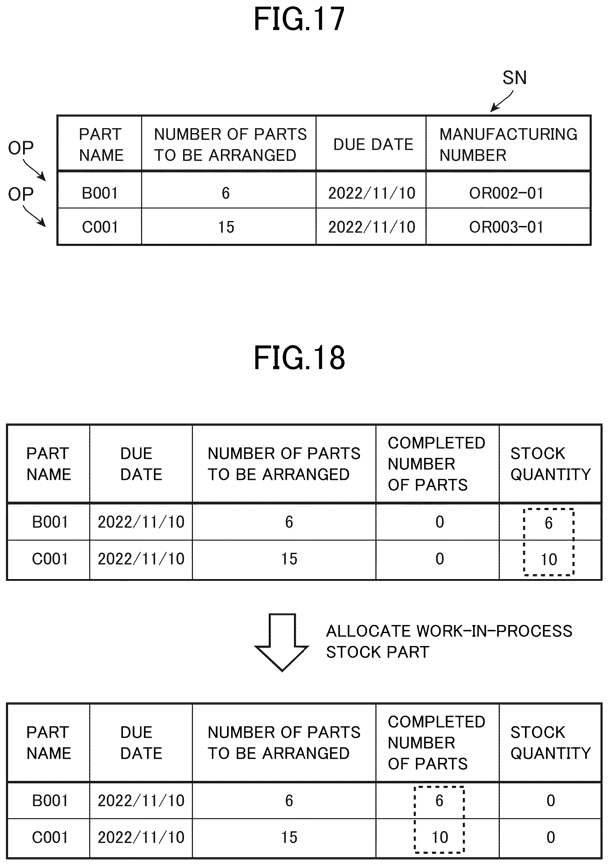

Figure 17 is a schematic diagram illustrating an example of the production arrangement of the present embodiment.

After the production arrangement illustrated in Figure 9, another production arrangement is made from the production management device 10 as illustrated in Figure 17. The new production arrangement includes the part "B001" and the part "C001" as the ordered parts OP. The number of parts "B001" to be arranged is 6, and the number of parts "C001" to be arranged is 15. In addition, the manufacturing number SN of the part "B001" is "OR002-01", and the manufacturing number SN of the part "C001" is "OR003-01".

Figure 18 is a schematic diagram illustrating an example of allocation of the work-in-process stock parts of the present embodiment.

The production arrangement information acquisition unit 131 of the control unit 130 acquires the production arrangement information 12 related to this production arrangement from the server 50. Since the blanking process has not been performed, the completed numbers of parts "B001" and parts "C001" for which the production arrangements have been made are both 0, as illustrated in Figure 18. On the other hand, in the previous blanking process, the stock quantities of work-in-process stock parts PP for the part "B001" and part "C001" are 6 and 10, respectively.

The allocation unit 139 of the control unit 130 determines whether there are work-in-process stock parts PP for the part "B001" and part "C001" before the nesting unit 132 nests the part data for the part "B001" and the part "C001" which are the ordered parts OP. As described above, since there are the work-in-process stock parts PP for the part "B001" and the part "C001", the allocation unit 139 determines that there are the work-in-process stock parts PP for the part "B001" and the part "C001". Then, the allocation unit 139 allocates the work-in-process stock parts PP for the part "B001" and the part "C001" as the ordered parts OP without nesting the part data for the part "B001" and the part "C001", as illustrated in Figure 18.

Specifically, since the number of parts "B001" to be arranged is 6 and the stock quantity of parts "B001" is also 6, the allocation unit 139 allocates all of the work-in-process stock parts PP for the part "B001" as the ordered parts OP for the part "B001". In addition, since the number of parts "C001" to be arranged is 15 and the stock quantity of parts "C001" is 10, all of the work-in-process stock parts PP for the part "C001" are allocated as the ordered parts OP for the part "C001".

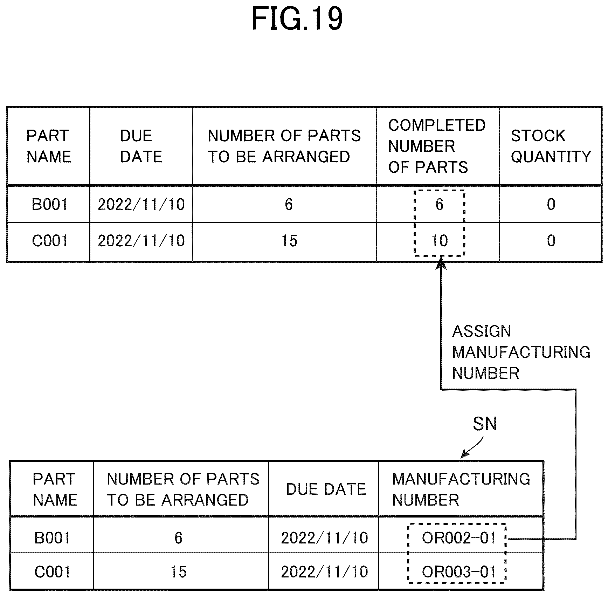

Figure 19 is a schematic diagram illustrating an example of assignment of a manufacturing number in the present embodiment.

In addition, the allocation unit 139 assigns the manufacturing numbers SN of the ordered parts OP to the work-in-process stock parts PP for the part "B001" and the part "C001" allocated as ordered parts OP for the part "B001" and the part "C001", as illustrated in Figure 19.

Specifically, the allocation unit 139 assigns the manufacturing number SN "OR002-01" to the work-in-process stock parts PP of the 6 parts "B001" that are allocated as the ordered parts OP for the part "B001". In addition, the allocation unit 139 assigns the manufacturing number SN "OR003-01" to the work-in-process stock parts PP of the 10 parts "C001" that are allocated as the ordered parts OP for the part "C001".

Furthermore, the nesting unit 132 creates the nesting data 142 in which the part data for 5 ordered parts OP for the part "C001" as which the work-in-process stock parts PP are not be allocated is nested. Then, the processing schedule information creation unit 133 creates the processing schedule information I related to the nesting data 142 that includes the part "C001". The blank processing machine 70 acquires the processing schedule information I and performs the blanking process on the basis of the nesting data 142.

In addition, the identifier issuance unit 135 issues a work job ID 144 of "WJ003" to the nesting data 142 that includes the part "C001". Furthermore, the association unit 137 associates the work job ID 144 "WJ003" with the part information PI for the part "C001".

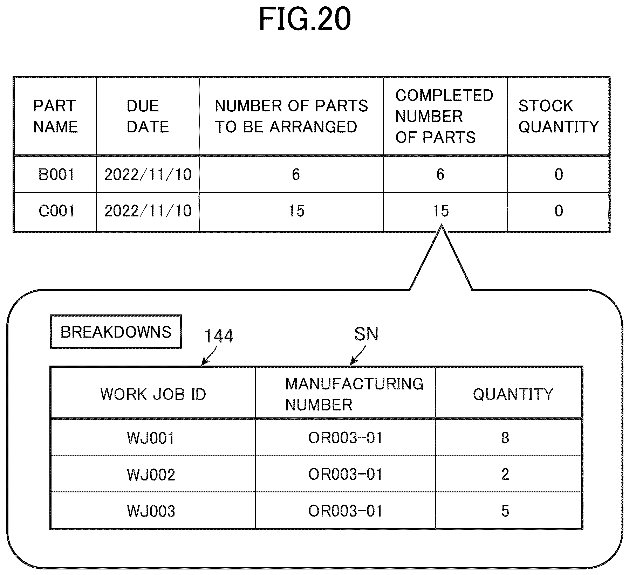

Figure 20 is a schematic diagram illustrating an example of the manufacturing status of the present embodiment.

In the manufacturing status after the allocation unit 139 allocates the work-in-process stock parts PP and the blanking process is performed on the sheet on the basis of the nesting data 142 with the work job ID 144 "WJ003", the completed numbers of parts "B001" and parts "C001" are 6 and 15, respectively, as illustrated in Figure 20. On the other hand, since the work-in-process stock parts PP are allocated, the stock quantities of work-in-process stock parts PP for the part "B001" and the part "C001" are both 0.

In addition, the breakdowns of the completed quantity of 15 for the part "C001" consist of 8 parts "C001" with the work job ID 144 "WJ001", 2 parts "C001" with the work job ID 144 "WJ002", and 5 parts "C001" with the work job ID 144 "WJ003".

The server 50 has storage media such as an HDD and an SSD, and stores the production technology management database and the processing result database. The production technology management database includes multiple pieces of production arrangement information 12 created by the production management device 10, and multiple pieces of processing schedule information I created by the nesting device 100. The processing result database includes the processing results of the blank processing machine 70. The data stored in the server 50 is referenced by the production management device 10, the nesting device 100, and the blank processing machine 70. The server 50 can adopt various known configurations, and therefore, a detailed description is omitted.

The blank processing machine 70 is a device that processes sheets under NC control, such as a laser processing machine, a turret punch press, a plasma processing machine, and a water jet processing machine. The blank processing machine 70 is configured to be communicable with the production management device 10, the server 50, and the nesting device 100.

The blank processing machine 70 performs the blanking process by reading the NC control program of the processing schedule information I stored in the production technology management database of the server 50. In addition, the blank processing machine 70 sends the processing results to the server 50 at the start of the blanking process, during the interruption of the blanking process, and at the completion of the blanking process. The process results include information such as the times corresponding to the start of processing for each sheet, the interruption of processing, and the completion of processing.

Furthermore, the blank processing machine 70 may be configured to be able to additionally nest the part data into the nesting data 142.

### [Stock Management Method According to the Present Embodiment]

Next, a stock management method using the nesting device 100 according to the present embodiment will be described. The stock management method according to the present embodiment is configured to generally include issuing a work job ID 144 as a unique identifier for each piece of nesting data 142, acquiring part information PI of one or more pieces of part data included in the nesting data 142, and associating the work job ID 144 of the nesting data 142 with the part information PI of the part data included in the nesting data 142, in which the nesting data 142 is able to include the part data for an ordered part OP having a manufacturing number SN and the part data for a work-in-process stock part PP having no manufacturing number, so that the work-in-process stock part PP is managed by the work job ID 144.

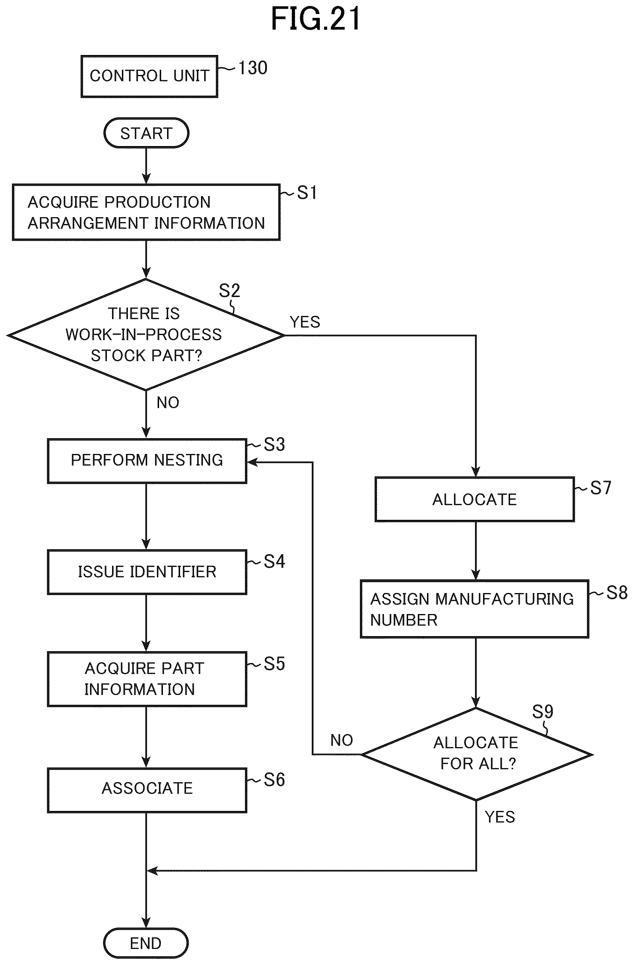

Figure 21 is a flowchart illustrating an example of the stock management method of the present embodiment.

The stock management method according to the present embodiment will be described in detail with reference to Figure 21. First, the production arrangement information acquisition unit 131 of the control unit 130 of the nesting device 100 acquires the production arrangement information 12 from the production technology management database of the server 50 (S1 in Figure 21: Production arrangement information acquisition step). The production arrangement information 12 includes the part information PI of the parts for which the production arrangements have been made (ordered parts OP). The part information PI has a part name of a part, the number of parts to be arranged, and a manufacturing number SN of the part.

The allocation unit 139 of the control unit 130 determines whether there is a work-in-process stock part PP having the same part information PI as the ordered part OP included in the production arrangement information 12 acquired by the production arrangement information acquisition unit 131 (S2 in Figure 21: Work-in-process stock part determination step). If the allocation unit 139 determines that there is no work-in-process stock part PP having the same part information PI as the ordered part OP (NO in S2 in Figure 21), the nesting unit 132 of the control unit 130 creates the nesting data 142 in which the part data for the ordered part OP included in the production arrangement information 12 is nested by the number of parts to be arranged (S3 in Figure 21: Nesting step). In addition, in the nesting step, the user may add the part data for the work-in-process stock part PP to the nesting data 142.

Then, the processing schedule information creation unit 133 of the control unit 130 creates the processing schedule information I related to the nesting data 142 created by the nesting unit 132. The processing schedule information creation unit 133 stores the created processing schedule information I in the production technology management database of the server 50.

In addition, the identifier issuance unit 135 of the control unit 130 issues a work job ID 144 as a unique identifier to the nesting data 142 (S4 in Figure 21: Identifier issuance step). The identifier issuance unit 135 may issue the work job ID 144 before the blank processing machine 70 performs the blanking process on the basis of the NC control program related to the nesting data 142, or may issue the work job ID 144 after the blank processing machine 70 has performed the blanking process.

The association unit 137 of the control unit 130 acquires the part information PI of the part data included in the nesting data 142 from the server 50 (S5 in Figure 21: part Information acquisition step). Then, the association unit 137 associates the work job ID 144 issued to the nesting data 142 by the identifier issuance unit 135 with the part information PI of the part data included in the nesting data 142 acquired in the part information acquisition step (S6 of Figure 21: Association step).

On the other hand, in the work-in-process stock part determination process, if determining that there is a work-in-process stock part PP having the same part information PI as the ordered part OP (YES in S2 in Figure 21), the allocation unit 139 of the control unit 130 allocates the work-in-process stock part PP having the same part information PI as the ordered part OP as the ordered part OP (S7 in Figure 21: Allocation step). In addition, the allocation unit 139 assigns the manufacturing number SN of the ordered part OP to the work-in-process stock part PP that is allocated as the ordered part OP (S8 in Figure 21: Manufacturing number assignment step).

If the allocation unit 139 allocates the work-in-process stock parts PP for all the ordered parts OP (YES in S9 in Figure 21), the control unit 130 ends the process without the nesting unit 132 nesting the ordered parts OP. On the other hand, if the allocation unit 139 does not allocate the work-in-process stock parts PP for all the ordered parts OP (NO in S9 in Figure 21), the control unit 130 creates the nesting data 142 in which the part data of the remaining ordered parts OP for which the nesting unit 132 does not allocate the work-in-process stock parts PP is nested (S3 in Figure 21: Nesting step).

Then, as in a case where there is no work-in-process stock part PP (NO in S2 in Figure 21), the processes from the identifier issuance step to the association step are executed on the nesting data 142. By the above processes, a series of stock management methods using the nesting device 100 according to the present embodiment are executed.

### [Advantages of Stock Management Device, Stock Management Method, and Stock Management Program According to the Present Embodiment]

As described above, the stock management device (nesting device 100) according to the present embodiment is configured to be able to execute an identifier issuance process of issuing a unique identifier (work job ID 144) for each piece of nesting data 142, a part information acquisition process of acquiring part information PI of one or more pieces of part data included in the nesting data 142, and an association process of associating the identifier (work job ID 144) of the nesting data 142 with the part information PI of the part data included in the nesting data 142, in which the nesting data 142 is able to include the part data for an ordered part OP having a manufacturing number SN and the part data for a work-in-process stock part PP having no manufacturing number SN, so that the work-in-process stock part PP is managed by the identifier (work job ID 144).

Then, the stock management device (nesting device 100) according to the present embodiment has such a configuration that an identifier (work job ID 144) is issued for each piece of nesting data 142 and the identifier (work job ID 144) of the nesting data 142 is managed in association with part information PI for a part included in the nesting data 142, and therefore has the advantage of being able to properly manage the stock and traceability of a work-in-process stock part PP having no manufacturing number SN.

In addition, the stock management device (nesting device 100) according to the present embodiment manages the number of pieces of part data of the work-in-process stock parts PP in the nesting data 142 as the quantity of work-in-process stock parts PP in association with the part information PI. Such a configuration enables the stock management device to grasp the stock quantity of the work-in-process stock parts PP that have been subjected to the blanking process and the number of work-in-process stock parts PP that will be subjected to the blanking process in the future, and therefore the stock management device has the advantage of being able to properly manage the work-in-process stock parts PP on the basis of the grasping of the stock quantity.

Furthermore, the stock management device (nesting device 100) according to the present embodiment manages the identifier (work job ID 144) of the nesting data 142 and the number of pieces of part data of the work-in-process stock parts PP in the nesting data 142 in association with the part information PI. Such a configuration enables the stock management device to grasp how many work-in-process stock parts PP that have been subjected to the blanking process are produced from which nesting data 142, and therefore the stock management device has the advantages of being able to grasp the stock quantity of work-in-process stock parts PP more accurately and improve the traceability of work-in-process stock parts PP, and of being able to manage the work-in-process stock parts PP more properly.

Furthermore, when the part data is newly added to the nesting data 142, the stock management device (nesting device 100) according to the present embodiment is configured to be able to associate the identifier (work job ID 144) of the nesting data 142 with the part information PI of the added part data. Such a configuration provides the advantage in that, for example, after a person in charge of the nesting process adds the part data for the work-in-process stock part PP to the nesting data 142, even when another person in charge of the nesting process newly adds part data for another work-in-process stock part PP to the nesting data 142, the stock management device has the advantage of being able to properly manage the work-in-process stock parts PP including the added work-in-process stock part

### PP.

In addition, the stock management device (nesting device 100) according to the present embodiment determines whether there is a work-in-process stock part PP having the same part information PI as the ordered part OP before nesting the part data for the ordered part OP, and if determining that there is the work-in-process stock parts PP, the stock management device is configured to allocate the work-in-process stock part PP as the ordered part OP without nesting the part data for the ordered part OP. Such a structure enables the stock management device, for example, to prevent the same parts as the already-existing work-in-process stock parts PP from being newly processed as the ordered parts OP, and therefore, the stock management device has the advantage of being able to effectively utilize the work-in-process stock parts PP and reducing the waste of the stock.

Furthermore, the stock management device (nesting device 100) according to the present embodiment is configured to manage the work-in-process stock part PP allocated as the ordered part OP by assigning the manufacturing number SN of the ordered part OP thereto. Such a configuration provides the advantage of ensuring the traceability of the work-in-process stock part PP allocated by the manufacturing number SN even in processes after the blanking process.

### [Modified Example]

As described above, a preferred embodiment of the present invention has been described, but the technical scope of the present invention is not limited to the scope of the description of the embodiment described above. Various modifications and improvements can be added to the embodiment described above.

For example, in the embodiment described above, the stock management device (nesting device 100) has been described as managing the number of pieces of part data of the work-in-process stock parts PP in the nesting data 142 as the quantity of the work-in-process stock parts PP in association with the part information PI, but the present invention is not limited thereto. The stock management device (nesting device 100) does not need to associate the number of pieces of part data of the work-in-process stock parts PP in the nesting data 142 as the quantity of work-in-process stock parts PP in association with the part information PI.

In the embodiment described above, the stock management device (nesting device 100) has been described as managing the identifier (work job ID 144) of the nesting data 142 and the number of pieces of part data of the work-in-process stock parts PP in the nesting data 142 in association with the part information PI, but the present invention is not limited thereto. The identifier (work job ID 144) of the nesting data 142 and the number of pieces of the part data of the work-in-process stock parts PP in the nesting data 142 do not need to be associated with the part information PI, and for example, if the work-in-process stock part PP having the same part information PI is included in multiple pieces of nesting data 142, the work-in-process stock part PP may be associated with the part information PI by the total quantity.

In the embodiment described above, when the part data is newly added to the nesting data 142, the stock management device (nesting device 100) has been described as being configured to be able to newly associate the identifier (work job ID 144) of the nesting data 142 with the part information PI of the added part data, but the present invention is not limited thereto. When the part data is newly added to the nesting data 142, the stock management device (nesting device 100) does not need to be able to newly associate the identifier (work job ID 144) of the nesting data 142 with the part information PI of the added part data.

In the embodiment described above, the stock management device (nesting device 100) determines whether there is a work-in-process stock part PP having the same part information PI as the ordered part OP before nesting the part data for the ordered part OP, and if determining that there is the work-in-process stock part PP, the stock management device is configured to allocate the work-in-process stock part PP as the ordered part OP without nesting the part data for the ordered part OP, but the present invention is not limited thereto. The stock management device (nesting device 100) does not need to allocate the work-in-process stock part PP as the ordered part OP.

In the embodiment described above, the stock management device (nesting device 100) has been described as being configured to manage the work-in-process stock part PP allocated as the ordered part OP by assigning the manufacturing number SN of the ordered part OP thereto, but the present invention is not limited thereto, and the stock management device (nesting device 100) does not need to assign the manufacturing number SN of the ordered part OP to the work-in-process stock part PP allocated as the ordered part OP.

In the embodiment described above, the manufacturing assistance system 1 has been described as including the server 50, but the present invention is not limited thereto, and the manufacturing assistance system 1 does not need to include the server 50. In addition, the nesting device 100 may include each database of the server 50 in the storage unit 140 instead of the server 50.

In the embodiment described above, the addition of part data for the work-in-process stock part PP to the nesting data 142 has been described on the premise that the user would perform the addition, but the present invention is not limited thereto. For example, the nesting unit 132 of the control unit 130 of the nesting device 100 may automatically add the part data for the work-in-process stock part PP to the nesting data 142 on the basis of the yield rate of the nesting data 142 and the stock status of each part.

### Reference Signs List

1 Manufacturing assistance system
10 Production management device
12 Production arrangement information
16 Production arrangement document
50 Server
70 Blank processing machine
100 Nesting device
110 Input unit
120 Display unit
130 Control unit
131 Production arrangement information acquisition unit
132 Nesting unit
133 Processing schedule information creation unit
135 Identifier issuance unit
137 Association unit
139 Allocation unit
140 Storage unit
141 Nesting data storage unit
142 Nesting data
143 Identifier storage unit
144 Work job ID (Identifier)
145 Association information storage unit
147 Stock management program
I Processing schedule information
OP Ordered part
PI Part Information
PP Work-in-process stock part
SN Manufacturing number

## Claims

1. A stock management device configured to be able to execute:
an identifier issuance process of issuing a unique identifier for each piece of nesting data;
a part information acquisition process of acquiring part information of one or more pieces of part data included in the nesting data; and
an association process of associating the identifier of the nesting data with the part information of the part data included in the nesting data,
wherein the nesting data is able to include the part data for an ordered part having a manufacturing number and the part data for a work-in-process stock part having no manufacturing number,
so that the work-in-process stock part is managed by the identifier.

2. The stock management device according to claim 1, configured to
manage the number of pieces of the part data of the work-in-process stock parts in the nesting data as the quantity of the work-in-process stock parts in association with the part information.

3. The stock management device according to claim 2, configured to
manage the identifier of the nesting data and the number of pieces of the part data for the work-in-process stock part in the nesting data in association with the part information.

4. The stock management device according to claim 1 or 2, configured to,
when the part data is newly added to the nesting data, be able to newly associate the identifier of the nesting data with the part information of the added part data.

5. The stock management device according to claim 1 or 2, configured to
determine whether there is the work-in-process stock part having the same part information as the ordered part before nesting the part data for the ordered part, and if determining that there is the work-in-process stock part, allocate the work-in-process stock part as the ordered part without nesting the part data for the ordered part.

6. The stock management device according to claim 5, configured to
manage the work-in-process stock part allocated as the ordered part by assigning the manufacturing number of the ordered part to the work-in-process stock part.

7. A stock management method, comprising:
issuing a unique identifier for each piece of nesting data;
acquiring part information of one or more pieces of part data included in the nesting data; and
associating the identifier of the nesting data with the part information of the part data included in the nesting data,
wherein the nesting data is able to include the part data for an ordered part having a manufacturing number and the part data for a work-in-process stock part having no manufacturing number,
so that the work-in-process stock part is managed by the identifier.

8. A stock management program configured to cause a stock management device to execute:
an identifier issuance process of issuing a unique identifier for each piece of nesting data;
a part information acquisition process of acquiring part information of one or more pieces of part data included in the nesting data; and
an association process of associating the identifier of the nesting data with the part information of the part data included in the nesting data,
wherein the nesting data is able to include the part data for an ordered part having a manufacturing number and the part data for a work-in-process stock part having no manufacturing number,
so that the work-in-process stock part is managed by the identifier.
